Europäisches Patentamt

(19) European Patent Office

Office européen des brevets

(11) Numéro de publication : **0 338 908 B1**

(12) **FASCICULE DE BREVET EUROPEEN**

(45) Date de publication du fascicule du brevet :
09.10.91 Bulletin 91/41

(51) Int. Cl.⁵ : **F24F 13/02**

(21) Numéro de dépôt : **89401058.6**

(22) Date de dépôt : **18.04.89**

(54) **Conduit de ventilation notamment pour la climatisation de véhicules automobiles.**

(30) Priorité : **22.04.88 FR 8805333**

(43) Date de publication de la demande :
**25.10.89 Bulletin 89/43**

(45) Mention de la délivrance du brevet :
**09.10.91 Bulletin 91/41**

(84) Etats contractants désignés :
**DE ES IT**

(56) Documents cités :
**EP-A- 0 027 276**
**DE-A- 3 536 379**
**DE-U- 8 202 047**
**DE-U- 8 601 134**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Colinet, André**
**33, rue Cartault**
**F-92800 Puteaux (FR)**
Inventeur : **Schwartz, Christian**
**769, avenue du Général Leclerc**
**F-92100 Boulogne Billancourt (FR)**
Inventeur : **Kerherve, Jean-Louis**
**7, rue Clément Ader**
**F-78140 Velizy-Villacoublay (FR)**

EP 0 338 908 B1

Jouve, 18, rue Saint-Denis, 75001 PARIS

## Description

La présente invention concerne un conduit de ventilation de forme gauche, isolé phoniquement extérieurement et intérieurement, notamment pour la climatisation de véhicules automobiles.

Le système de climatisation des automobiles modernes comprend un générateur d'air chaud et éventuellement un générateur d'air froid. Cet air climatisé est distribué à partir d'un distributeur situé généralement sous la planche de bord, vers les bouches d'aération par des conduits. Le passage de l'air à l'intérieur de ces conduits et les battements des gaines électriques et des gaines de commande des organes de répartition d'air sur lesdits conduits élèvent le niveau sonore à l'intérieur de l'habitacle.

La publication DE-U-8601134 décrit un canal de ventilation encastré dans une fenêtre d'une plaque de fixation.

La publication DE-U-8202047 décrit un volet isolé disposé dans un conduit de ventilation.

La publication DE-A-3536379 décrit un conduit de ventilation réalisé en un matériau insonorisant.

L'invention a pour but de pallier les inconvénients des conduits connus. Elle fournit un conduit isolé phoniquement à l'intérieur et à l'extérieur pour éviter les bruits d'écoulement d'air et de battement de gaines électriques ou autres et s'adapte par ses extrémités aux raccords existants prévus sur le véhicule. Ce conduit peut avoir un profil gauche.

Le conduit de ventilation, selon l'invention, est caractérisé par le fait qu'il comprend un tronçon central isolé tubulaire constitué par une âme en plastique rigide garni sur ses faces intérieure et extérieure d'un revêtement insonorisant en mousse, ce tronçon isolé tubulaire étant terminé par des embouts de raccordement.

Selon une caractéristique, le conduit comprend des tronçons d'extrémité en plastique non revêtus de mousse et soudés au tronçon central.

Les dessins annexés illustrent l'invention :

— La figure 1 représente en coupe longitudinale le conduit selon l'invention,

— La figure 2 représente une section de l'élément central du conduit de la figure 1,

— La figure 3 représente le détail des extrémités de l'élément central et leur liaison avec les embouts,

— La figure 4 représente la coupe longitudinale d'un conduit avec une variante de l'élément central,

— La figure 5 représente une section de l'élément central de la figure 4,

— La figure 6 représente un conduit réalisé par deux demi-coquilles garnies de mousse isolante,

— La figure 7 représente une section transversale du conduit de la figure 6.

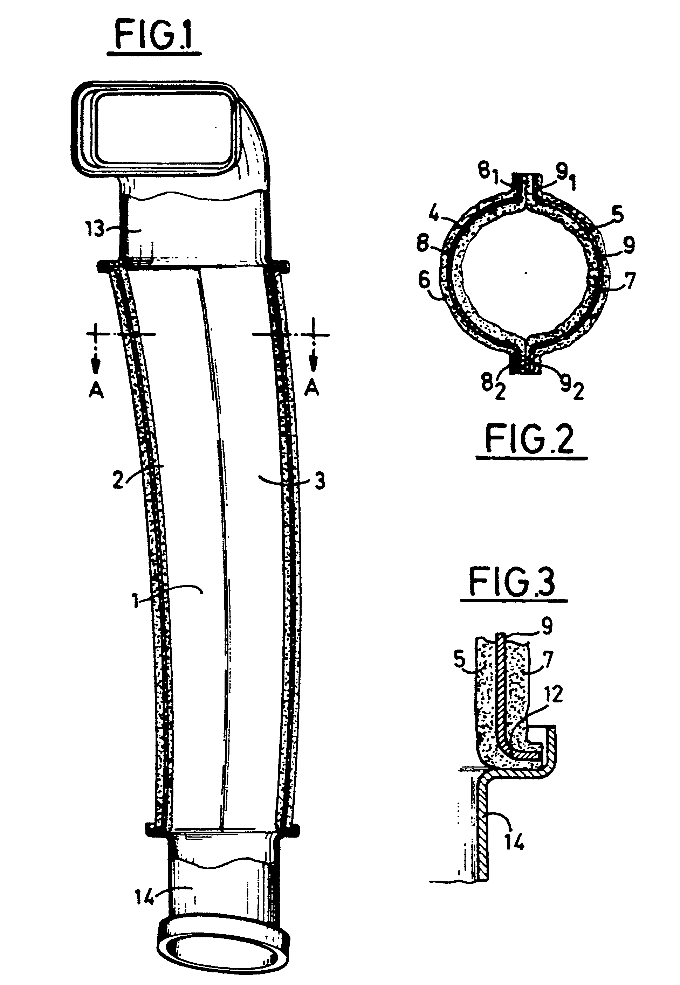

Le conduit représenté sur les figures 1 et 2 comporte un tronçon central tubulaire 1 constitué de deux demi-coquilles 2 et 3. Chaque demi-coquille 2 ou 3 est constituée par un matériau sandwich présentant une âme 8 ou 9 respectivement revêtue sur sa face intérieure d'une feuille de mousse isolante 4 ou 5 d'une épaisseur de dix millimètres environ, et sur sa face extérieure d'une feuille de mousse isolante 6 ou 7 d'une épaisseur de cinq millimètres environ. La mise en forme de ces demi-coquilles est obtenue par thermo-formage de feuilles de plastique rigide garnies sur ses faces extérieure et intérieure d'une feuille de mousse dont l'épaisseur a été définie précédemment.

Ces demi-coquilles comportent chacune deux ailes latérales 8-1 et 8-2 et 9-1 et 9-2 (figure 2) permettant la liaison entre elles par des procédés connus. Un collet 12 permet la liaison par des procédés connus en soi, avec les embouts 13 et 14 (figure 3).

Suivant le mode de réalisation de la figure 1, le tronçon 1 se raccorde à des embouts 13 et 14 en plastique rigide non isolés phoniquement (non revêtus de mousse) qui sont munis de zones de raccordement avec le tronçon central d'une part et une bouche d'aération d'autre part. Ces embouts sont réalisés en plastique rigide par soufflage. La figure 3 décrit un détail de l'assemblage du tronçon central 1 avec l'embout 14.

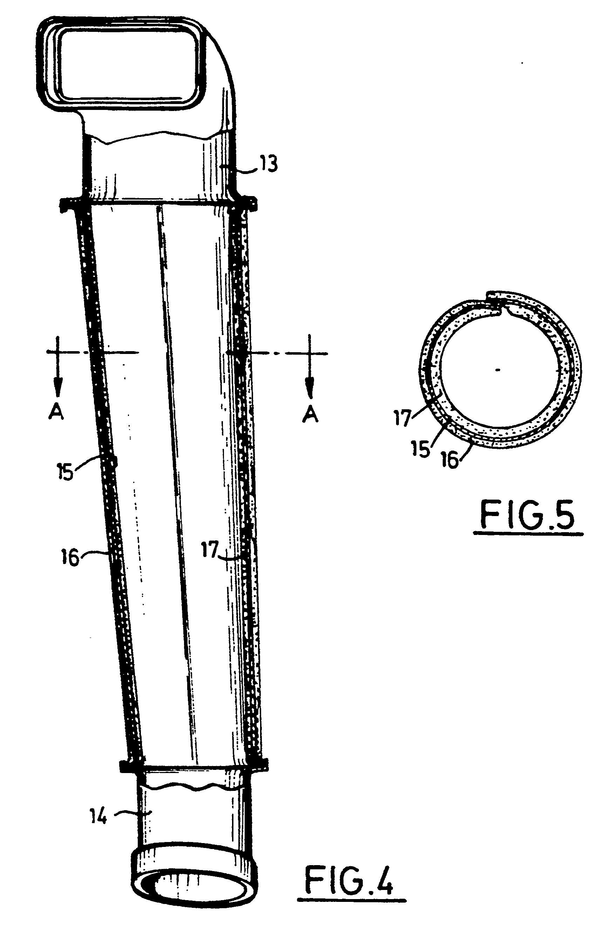

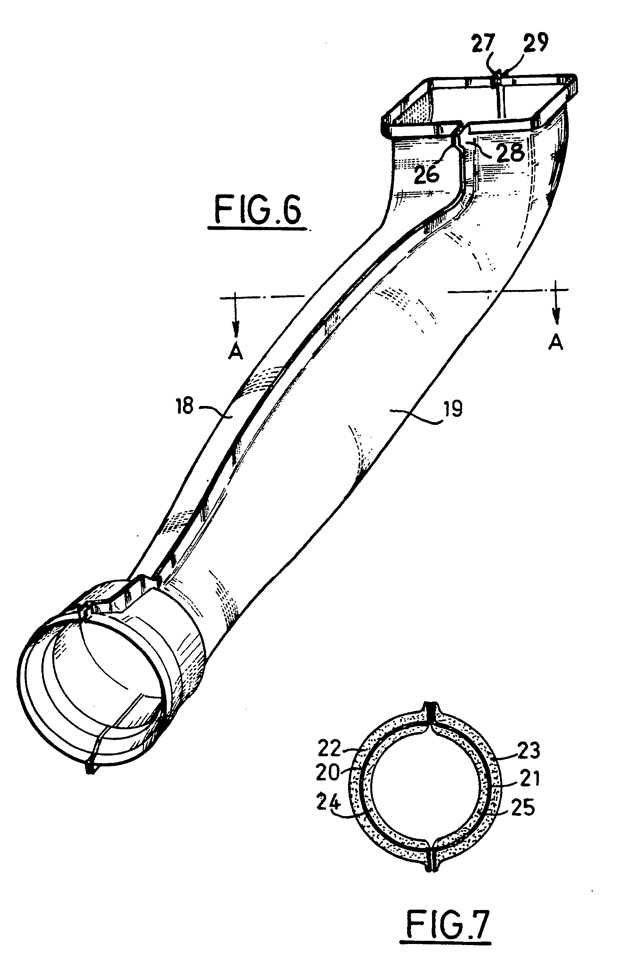

Sur les figures 4 et 5, on peut voir un autre moyen de réalisation du conduit. Le tronçon central est réalisé par une feuille 15 de plastique rigide revêtu d'une feuille de mousse 16 et 17 d'une épaisseur adéquate, sur chacune de ses faces, roulée et agrafée selon un moyen connu.

Dans le mode de réalisation selon la figure 6, les embouts sont intégrés au tronçon isolé. Le conduit est constitué de deux demi-coquilles 18 et 19 réalisées chacune par une feuille de plastique rigide 20 et 21 revêtue d'une feuille de mousse 22 et 23, 24 et 25, d'une épaisseur adéquate sur chacune de ses faces. Ces demi-coquilles comportent chacune deux ailes latérales 26 et 27, 28 et 29 (figure 6) permettant leur liaison par un procédé connu en soi.

## Revendications

1. Conduit de ventilation de forme gauche, muni d'embouts (13 et 14) de raccordement en plastique rigide, permettant le montage sur une planche de bord de véhicule automobile, caractérisé en ce qu'il comprend un tronçon isolé tubulaire (1) constitué par une âme en plastique rigide (8 et 9) garnie sur ses faces intérieure et extérieure d'un revêtement insonorisant en mousse (4 et 5, 6 et 7), ce tronçon isolé tubulaire étant terminé par lesdits embouts de raccordement.

2. Conduit selon la revendication 1, caractérisé en ce qu'il comprend des embouts d'extrémité (13 et

14) en plastique non revêtu de mousse, soudés au dit tronçon central (1).

3. Conduit selon l'une quelconque des revendications précédentes, caractérisé en ce que le tronçon central (1) garni de mousse est réalisé en deux demi-coquilles (2 et 3) liées entre elles.

4. Conduit selon l'une quelconque des revendications précédentes, caractérisé en ce que le tronçon central (1) garni de mousse est réalisé en une feuille de plastique rigide (15) garnie de mousse, roulée et agrafée.

5. Conduit selon l'une quelconque des revendications précédentes, caractérisé en ce que le tronçon isolé est intégré aux embouts d'extrêmité.

## Patentansprüche

1. Luftleitungsrohr von gewundener Form, das mit Anschlußkappen (13 und 14) aus steifem Kunststoff versehen ist, zum Anbau an ein Kraftfahrzeugarmaturenbrett, dadurch gekennzeichnet, daß es einen rohrförmigen isolierten Abschnitt (1) aufweist, der aus einem Kern aus steifem Kunststoff (8 und 9) besteht, welcher sowohl auf seiner Innenseite als auch auf seiner Außenseite mit einer schalldämpfenden Schicht aus Schaum (4 und 5, 6 und 7) versehen ist, wobei dieser rohrförmige isolierte Abschnitt in den Anschlußkappen endet.

2. Rohr nach Anspruch 1, dadurch gekennzeichnet, daß es Endkappen (13 und 14) aus nicht mit Schaum bedecktem Kunststoff aufweist, die mit dem mittleren Abschnitt (1) verschweißt sind.

3. Rohr nach einem der vorhergehenden Ansprüche, dadurch gekennzeichnet, daß der mit Schaum bedeckte mittlere Abschnitt (1) aus zwei miteinander verbundenen Halbschalen (2 und 3) besteht.

4. Rohr nach einem der vorhergehenden Ansprüche, dadurch gekennzeichnet, daß der mit Schaum bedeckte mittlere Abschnitt (1) aus einer mit Schaum bedeckten steifen Kunststoffbahn (15) gefertigt ist, welche aufgerollt und geklammert ist.

5. Rohr nach einem der vorhergehenden Ansprüche, dadurch gekennzeichnet, daß der isolierte Abschnitt mit den Endkappen einen Verbund bildet.

## Claims

1. A ventilation conduit of non-straight shape which is provided with connecting end portions (13 and 14) of rigid plastics material for fitting to a motor vehicle dashboard characterised in that it comprises a tubular insulated portion (1) formed by a core (8 and 9) of rigid plastics material and lined on its internal and external faces with a sound-proofing foam covering (4 and 5, 6 and 7), said tubular insulated portion being terminated by said connecting end portions.

2. A conduit according to claim 1 characterised in that it comprises end portions (13 and 14) of plastics material which is not covered with foam, which are welded to said central portion (1).

3. A conduit according to either one of the preceding claims characterised in that the foam-lined central portion (1) is made from two half-shells (2 and 3) which are connected together.

4. A conduit according to any one of the preceding claims characterised in that the foam-lined central portion (1) is made from a sheet of rigid plastics material (15) which is lined with foam, rolled and clasped together.

5. A conduit according to any one of the preceding claims characterised in that the insulated portion is integrated in the end portions.

# FIG.1

# FIG.2

# FIG.3

13

15

16

17

A

A

14

## FIG.4

17

15

16

## FIG.5

FIG.6

FIG.7